# EUROPEAN PATENT APPLICATION

(11) **EP 4 345 483 A1**
(43) Date of publication of application: **03.04.2024**
(21) Application number: 22199238.1
(22) Date of filing: 30.09.2022
(51) Int. Cl.: G01S 5/00, G01S 5/02

(54) **MOVING OBJECT LOCALISATION ACROSS DIFFERENT AREAS OF SENSOR COVERAGE**

(71) Applicant: Volvo Autonomous Solutions AB, 405 08 Göteborg (SE)
(72) Inventor: BERGLIND, Niclas, 413 19 Göteborg (SE)
(74) Representative: Zacco Sweden AB

(57) **Abstract**

A method of localizing a vehicle in an area of vehicle operation where the area comprises a plurality of sub-areas, at least two of the sub-areas using different types of sensors for vehicle localization is disclosed. The method comprises receiving sensor data from a plurality of different types of sensors positioned in the area, at least two of the different types of sensors providing location data using different positioning coordinate systems, automatically calibrating received sensor data associated with different positioning coordinate systems to form sensor data associated with a common positioning coordinate system; and localizing the vehicle using the calibrated sensor data associated with the common positioning coordinate system in the area, where the automatic calibration of the received sensor data includes performing at least one non-linear transform on received sensor data provided by the different types of sensors to provide the sensor data associated with the common positioning coordinate system.

## Description

### TECHNICAL FIELD

The disclosure relates generally to moving object localization across different areas of sensor coverage. In particular, but not exclusively, to vehicle localization in an area where multiple different measurement systems are provided. In particular aspects, the disclosure relates to localizing a vehicle in an area of vehicle operation where the vehicle is being autonomously or remotely driven. The vehicle may or may not be following a guided trajectory. The disclosure can be applied in heavy-duty vehicles, such as trucks, buses, and construction equipment and to other types of moving machines and machinery which may need to have their positions determined as they move within an area which includes sub-areas with different types of sensor coverage. Although the disclosure may be described with respect to a particular vehicle, the disclosure is not restricted to any particular vehicle.

### BACKGROUND

As the use of autonomous and remote controlled vehicles, particularly heavy duty vehicles grows, there is a need for vehicles to be more accurately aware of their surroundings and their positions relative their surroundings. This allows the degree of human oversight to be reduced, however, unless vehicles are able to consistently be aware of their location regardless of the specific characteristics of the areas where they operate, reducing the degree of human oversight over their location will be attached to various risks. The present disclosure seeks to provide a method of localizing a vehicle or other type of moving machine which may improve their safe operation, particularly where the vehicle is an autonomously or remotely driven heavy duty vehicles or machine, such as a truck etc.

### SUMMARY

The disclosed technology relates to a method of localizing a moving object, for example, a vehicle, in its operational area, for example, in an area of vehicle operation, is provided.

The disclosed technology relates to a system for localizing a vehicle in a plurality of different sensor coverage areas of vehicle operation. The system comprises the vehicle and/or a remote server receiving sensor data from a plurality of different types of sensors positioned in the different sensor coverage areas, at least two of the different types of sensors providing location data using different positioning coordinate systems in some embodiments. The received sensor data is automatically calibrated in a co-ordinate system different from at least one co-ordinate system used by one type of received sensor data. In other words, the received sensor data is associated with different positioning coordinate systems and calibrated so that consistent and continuous sensor data is generated in the common positioning coordinate system. This allows the vehicle to be localized using the calibrated sensor data associated with the common positioning coordinate system in the area in a continuous manner, no matter which of the different sensor coverage areas it is operating in. The automatic calibration of the received sensor data may include performing a non-linear transform on some or all of the received sensor data provided by the different types of sensors to provide the calibrated sensor data in the common positioning coordinate system.

Advantageously, the disclosed technology according to the first aspect allows for continuous and consistent localization to be achieved even when the vehicle's operational area comprises sections where there are different types of sensor coverage for vehicle localization.

A first aspect of the disclosed technology relates to a method of localizing a vehicle in an area of vehicle operation, the area comprising a plurality of sub-areas, at least two of the plurality of sub-areas using different types of sensors for vehicle localization, the method comprising receiving sensor data from a plurality of different types of sensors positioned in the area, at least two of the different types of sensors providing location data using different positioning coordinate systems, automatically calibrating received sensor data associated with different positioning coordinate systems to form sensor data associated with a common positioning coordinate system; and localizing the vehicle using the calibrated sensor data associated with the common positioning coordinate system in the area, where the automatic calibration of the received sensor data includes performing at least one non-linear transform ]on received sensor data provided by the different types of sensors to provide the sensor data associated with the common positioning coordinate system.

The first aspect of the disclosed technology seeks to provide vehicle localization in an operational area of a vehicle where multiple different measurement systems are provided and advantageously provides a way of managing global measurement errors between the two different systems. It may more accurately locate a vehicle such as an autonomous vehicle in some embodiments.

In some embodiments, the vehicle is a heavy-duty vehicle.

In some embodiments, the vehicle is an autonomously or remotely driven vehicle.

In some embodiments, the received sensor data from a sensor of the plurality of sensors is weighted based on the position of the sensor in the common coordinate system.

In some embodiments, the received sensor data from a sensor of the plurality of sensors is binary weighted based on the vehicle location and the coverage area of the sensor in the common coordinate system so that sensor data from a sensor is used when the vehicle is inside the defined coverage area for that sensor in the map.

In some embodiments, at least one of the sensors providing sensor data comprises a global positioning system, GPS, sensor and the received sensor data includes global positioning system data from the GPS sensor.

In some embodiments, the GPS sensor data may include GPS sensor data from sensors mounted on the vehicle.

In some embodiments, at least one of the sensors is a short-range positioning sensor, wherein the received sensor data comprises sensor data indicative of a relative position of the vehicle to the sensor.

In some embodiments, the sensor data provides a type of relative measurement which may need to be processed with an algorithm configured to map the relative measurements to a map in order to get a position in the map's coordinate system. Advantageously, once the map-coordinate position is known, this can then be mapped to relate to one or more other coordinate systems in the system, for example, a GPS co-ordinate system, using the disclosed technology.

In some embodiments, the received sensor data which is transformed to the common coordinate system includes one or more of: roll data, pitch data, and yaw data.

In some embodiments, the sensor data provides measurement data such as one or more of roll, pitch and yaw data which is processes to yield a position in a map coordinate system. Advantageously this allows the vehicle position, roll, pitch and/or yaw measurements in that map coordinate system to be mapped to corresponding measurements of vehicle position, roll, pitch and/or yaw in one or more other coordinate systems.

In some embodiments, localizing the vehicle determines a vehicle pose in the area.

In some embodiments, the method is performed on-board the vehicle.

In some embodiments, a plurality of non-linear transforms are performed on received sensor data, each nonlinear transform being only applied for sensor data received from a particular sensor area of coverage.

In some embodiments, the vehicle is an autonomous, semi-autonomous or remote-controlled vehicle.

In some embodiments, the method is performed by a remote server configured to receive sensor information from the vehicle and to provide the vehicle with localization information.

In some embodiments, at least one sub-area has no line of sight to a global positioning system satellite.

Another aspect of the disclosed technology comprises an apparatus configured to localize a vehicle in an area of vehicle operation, the apparatus comprising: memory; one or more processors or processing circuitry; and computer program code, which, when loaded from the memory and executed by the one or more processors or processing circuitry, cause the apparatus to receive sensor data from a plurality of sensors positioned in the area, automatically calibrate received sensor data associated with different positioning coordinate systems to form sensor data associated with a common positioning coordinate system, and localize the vehicle using the calibrated sensor data associated with the common positioning coordinate system in the area, wherein the apparatus automatically calibrates the received sensor data by performing at least one non-linear transform on received sensor data provided by different types of sensors to provide the sensor data associated with the common positioning coordinate system.

Advantageously, the apparatus allows a vehicle to determine its position relative to its surroundings in a consistently accurate way regardless of what type of sensor coverage system is being relied upon by the vehicle for localization purposes whilst it is operating.

The apparatus may be mounted on a vehicle as a dongle or similar attachable component in some embodiments, which advantageously may allow retrofitting the localization system provided by the apparatus to vehicles currently deployed in the field.

In some embodiments of the apparatus, the vehicle is a heavy-duty vehicle and the apparatus is attached to or integrated in the heavy-duty vehicle.

In some embodiments of the apparatus, received sensor data from a sensor of the plurality of sensors is weighted based on the position of the sensor in the common coordinate system.

In some embodiments, at least one of the sensors providing sensor data comprises a global positioning system, GPS, sensor and the received sensor data includes global positioning system data from the GPS sensor.

In some embodiments, at least one of the sensors is a short-range positioning sensor, wherein the received sensor data comprises sensor data indicative of a relative position of the vehicle to the sensor.

In some embodiments, the received sensor data which is transformed to the common coordinate system includes one or more of: roll data, pitch data, and yaw data.

In some embodiments, localizing the vehicle determines a vehicle pose in the area.

In some embodiments, however, the apparatus may be integrated into a vehicle as a component on a production line.

According to a third aspect of the disclosed technology, a vehicle comprises the apparatus according to the second aspect or any one of its embodiments disclosed herein.

In some embodiments, the vehicle comprising the apparatus is an autonomous, semi-autonomous, or remotely controlled heavy-duty vehicle.

The apparatus allows the vehicle to operate more safely as it is can determine its position along its planned trajectory relative to its surroundings more accurately in some embodiments.

Another, fourth, aspect of the disclosed technology comprises a computer system comprising

memory, one or more processors or processing circuitry; and computer code, wherein loading the computer code from memory and executing it using the one or more processors or processing circuitry causes an apparatus to be configured to perform a method according to the first aspect or any one of its embodiments disclosed herein.

Another, fifth, aspect of the disclosed technology comprises a vehicle comprising a computer system according to the fourth aspect or any one of its embodiments disclosed herein, wherein the vehicle is configured by the computer system to perform a method according to the first aspect or any one of its embodiments disclosed herein.

Another, sixth, aspect of the disclosed technology comprises a computer program product comprising program code for performing, when executed by a computer system according to the fourth aspect or any of its embodiments disclosed herein, a method according to the first aspect or any one of its embodiments disclosed herein.

Another, seventh, aspect of the disclosed technology relates to a control system comprising one or more control units configured to perform a method according to the first aspect or any one of its embodiments disclosed herein.

Another, eighth, aspect of the disclosed technology relates to a non-transitory computer-readable storage medium comprising a set of instructions, which when executed by a processor device comprising one or more processors or processor circuitry, causes the processor device to perform a method according to the first aspect or any one of its embodiments disclosed herein.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

Embodiments of various aspects of the disclosed technology will now be described with reference to the appended drawings which are by way of example only, and in which:
**FIG.** 1 schematically illustrates an example of a vehicle localization system according to some embodiments of the disclosed technology;
**FIG. 2A** shows schematically an example of a flow-chart of a method of localizing a vehicle in a defined area according to an example embodiment of the disclosed technology;
**FIG. 2B** shows schematically an example of a flow-chart of a method of localizing a vehicle in a defined area according to some embodiments of the disclosed technology;
**FIG.** 3 shows another example of an area of vehicle operating which includes a tunnel where the method of localizing a vehicle may be implemented according to some embodiments of the disclosed technology;
FIG. 4 shows schematically a simplified example of a vehicle configured to implement an embodiment of the method of localizing a vehicle in a defined area according to some embodiments of the disclosed technology; and
**FIG.** 5 shows schematically a simplified example of a server configured to implement an embodiment of the method of localizing a vehicle in a defined area according to some embodiments of the disclosed technology.

### DETAILED DESCRIPTION

Aspects set forth below represent the necessary information to enable those skilled in the art to practice the disclosure.

The terminology used herein is for the purpose of describing particular aspects only and is not intended to be limiting of the disclosure. As used herein, the singular forms "a," "an," and "the" are intended to refer to both singular and plural forms, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

For the sake of conciseness and clarity when explaining novel and/or inventive aspects of the disclosed technology, where these aspect include, or optionally may include, a feature or component which is already known in the art having a function which is already known in the art, the drawings and descriptions may omit to refer to such features and/or components.

The disclosed technology relates generally to locating a moving object such as a moving vehicle whose location within its operational area needs to be known either by the object/vehicle or by a remote server. The movement of such objects/vehicles may be autonomously, semi-autonomously, manually or remotely controlled in some embodiments of the disclosed technology.

The description of the disclosed technology is particularly relevant for vehicles and location moving machines/machinery, which may or may not comprise machines including moving parts.

The remainder of this disclosure will refer to vehicles, however, this term should be construed to refer to moving objects such as machines and machinery unless the context clearly dictates otherwise.

Vehicles which have defined vehicle trajectories within an operational area use localization or positioning systems to confirm their location along their trajectories and/or relative to features within their operational area. Some vehicles require different technologies to be used in different operational areas. For example, vehicles which operate partially underground cannot rely on a satellite-based location system such as GPS when they are underground. Instead, they may rely on beacons, for example, Wi-Fi or Bluetooth or another short range beacon array, where the relative location of the vehicle to one or more beacons is used to define the position of the vehicle when underground. In some situations, triangulation may be used to pin-point a vehicle's location more accurately relative to beacons or signal sources whose locations are already known, so as to obtain the location of the vehicle in more absolute terms. Another technique which may be used in some situations where localisation of a vehicle is required but GPS is not available is SLAM (Simultaneous Localization And Mapping). In some embodiments, in some areas where there is no GPS, SLAM is performed using vehicle mounted LIDAR sensors scanning the distance from the vehicle to surrounding features and determining the distance. For example, in some areas a vehicle may use SLAM to determine a series of measurements to features such as surrounding walls in a tunnel or similar situation where there is no GPS coverage. Such SLAM measurements may be used to create a map on or off-line. Once created the SLAM map can be used to find a vehicle's position by fitting subsequent SLAM measurements to the map.

By way of example, consider where a vehicle comprises an autonomous truck which is moving in an open environment such as a big open field and then the vehicle moves along into an underground tunnel. The most common global positioning sensor (GPS) will fail at some point near the entrance to such a tunnel and the vehicle will then need to use another source of position measurements in order to obtain an accurate and continuous position for its control system so that the vehicle's steering and propulsion system can be configured to control the vehicle follow its planned trajectory path. Some embodiments of the disclosed technology map where a sensor system is available so that the vehicle's propulsion system can use this information to determine when a sensor system will fail along the vehicle's trajectory. This allows the vehicle to only use a sensor system for those trajectory segments where valid sensor data is available and the vehicle ceases to use the sensor system just before where the sensor system is known to fail. Advantageously by not using sensor system data in regions where such data is likely to be subject to errors it avoids feeding the localization system with erroneous data.

Where a vehicle's path passes through different environments, for example, at least one open environment and at least one enclosed environment such as underground or enclosed areas such as under a bridge, within a building, inside a mine or along a tunnel it will need to use more than one positioning system if a continuous position of the moving vehicle is required. However, errors may occur when transitioning between different positioning systems as a result of the different types of positioning sensor systems used along the vehicle's path.

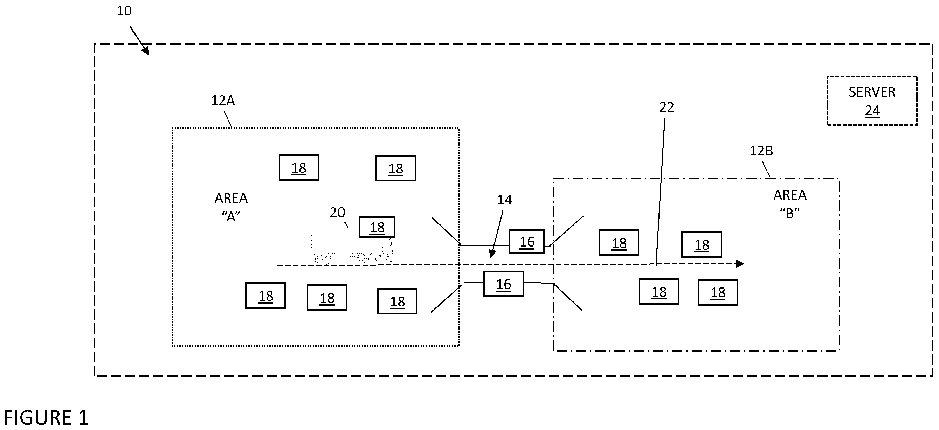

**FIG. 1** schematically illustrates an example embodiment of a vehicle localization system 1 according to the disclosed technology. In FIG. 1, the system 1 provides localization using consistent coordinates in an area of vehicle operation which comprises a number of different sub-areas 12A, 14, 12B. The plurality of different types of vehicle operational sub-areas, are shown schematically as area "A" 12A and area "B" 12B, which in this example are open areas, and an enclosed area 14, which in this example comprises a tunnel or tunnel system linking the two open areas 12A,12B. In Fig. 1, the plurality of vehicle operation areas 12A, 12B, 14 may each have different types of sensor coverage for vehicle localization. For example, GPS sensors may be mounted on a vehicle and/or provided as beacons for providing sensor coverage in areas 12A, 12B and short-range radio sensors may be used in tunnel 14.

Whilst the disclosed vehicle localization system 1 is particular useful if at least one sub-area of vehicle operation has no line of sight to a global positioning system, GPS, satellite and relies on a different sensor system for providing coverage for vehicle localization, for example, a short-range sensor system such as Bluetooth^{™} or the like, the vehicle localization system 1 may also be useful where different types of sensors, for example, different types of Bluetooth^{™} sensor systems in some embodiments, are used in different sub-areas of vehicle operation. Such different sensor system may have different characteristics in terms of how they manage location errors and/or the sensor ranges and accuracy of localization. Vehicles, particularly those which are remotely or autonomously driven, however usually require their position to be known consistently along their trajectory path. When transitioning between areas with different types of sensor coverage a vehicle may find that errors are introduced as its location in a coordinate system according to one type of sensor may differ from that provided in the same coordinate system when determined using a different type of sensor system.

In the example shown in FIG. 1, the tunnel area 14, also referred to herein as tunnel 14, includes sensors 16 of a type suitable to localize the position of the vehicle within the tunnel 14. Each of the open areas 12A, 12B, as shown in FIG. 1, are provided with a different type of sensors, labelled sensors 18. In some embodiments, the sensor coverage in a sub-area such as 12A or 12B shown in Figure 1 may be provided using a satellite location systems, for example, coverage may be provided using a GPS sensor 18 mounted on a vehicle. Such an on-board sensor system may work in addition to localization sensors which may provide beacons for localisation also in open sub-areas 12A, 12B of vehicle operation. Such a configuration of on-board GPS sensor 18 and sensors 18 having fixed locations within the open areas of the site may allow for better accuracy of vehicle localization and/or provide information about the pose of a vehicle 20. In particular, using a sensor on board a vehicle to detect a signal from a beacon at a fixed location in an open sub-area may be particularly useful if the vehicle is an articulated vehicle towing one or more other vehicles and/or containers which may or may not have their own GPS sensor systems on board. Such beacons however may differ in different subareas of vehicle operation. Also, only external sensor coverage is provided for vehicle localization in tunnel 14 as there is no line of sight available with any GPS satellite for vehicle 20 to use when it is operating in that sub-area. In other words, sensor coverage in the tunnel cannot use GPS and so would rely on the vehicle 20 having on-board sensors configured to detect signals from positioning sensors 16 (also referred to herein as beacons) which provide the sensor localisation coverage within the tunnel 14.

In the example illustrated schematically in FIG. 1, vehicle 20 is configured to follow a vehicle trajectory path 22 which passes through the plurality of different types of vehicle operational areas 12A, 12B, 14, and it is desirable for the vehicle 20 to be aware of its position along its trajectory path in a consistent and continuous manner as otherwise the vehicle may follow a trajectory 22 based on its sensed location which deviates from its true trajectory path.

As shown in FIG.1, the vehicle localization system 1 also includes a server 24, however, server 24 may not always be included in some embodiments of the vehicle localization system 1 alternatively/instead a plurality of servers 24 may be provided in some embodiments. In some embodiments, the vehicle 20 may be configured to send or receive localization data with a server 24. For example, the server 24 may be configured to provide the vehicle with vehicle trajectory information which control system of the vehicle 20 may use to adjust its path, speed and/or direction of motion, in other words to adjust its vehicle trajectory 22. In some embodiments, server 24 may be configured to receive sensor data from the vehicle, for example, at least some localization sensor data may be received from vehicle 22 and processed. In some embodiments, server 24 may provide the vehicle with location information. This may be a verification or confirmation of a location sensed by the vehicle or a more accurate indication of the vehicle's location. In some embodiments, however, server 24 may be omitted if the vehicle is configured to only use vehicle localization data generated on-board the data.

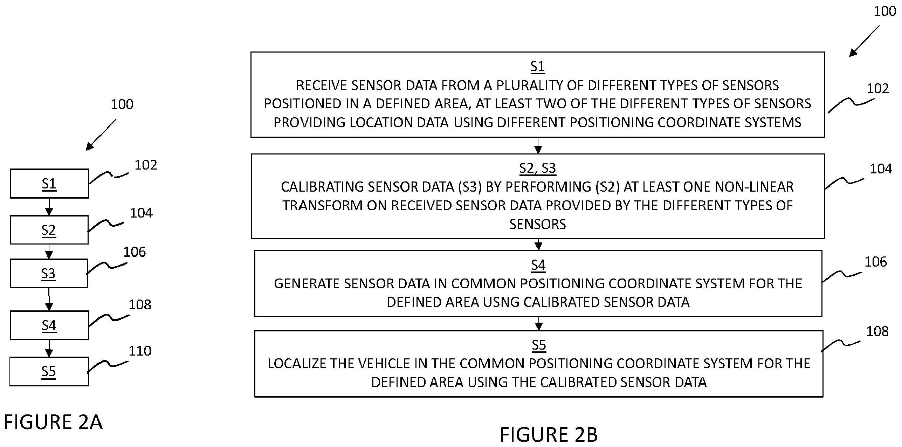

The vehicle 20 and/or server 24 may be configured to perform an embodiment of the example method 100 of localizing a vehicle 20 along a vehicle trajectory which passes through a plurality of different areas 12A, 12B, 14. In some embodiments, as shown in FIG. 2A, the method 100 comprises receiving sensor data from a first sensor system 16 located in a first area within which the vehicle is travelling, receiving data from the first sensor system and from at least one different sensor system as the vehicle transitions into a second area having different location sensing characteristics from the first area. For example, the first area may be an open area 12A such as is shown in FIG. 1A and the second area may comprise an underground area such as area 14 shown in FIG. 1B in some embodiments. The first and second areas use different types of sensors 16, 18 to provide vehicle location data, where the different types of sensors 16, 18 provide location data using different positioning coordinate systems. The method 100 includes automatically calibrating received sensor data associated with different positioning coordinate systems to form sensor data associated with a common positioning coordinate system and localizing 108 the vehicle 20 using the calibrated sensor data associated with the common positioning coordinate system for the operational areas along the vehicle's path.

The disclosed examples of the method 100 automatically calibrate received sensor data by performing at least one non-linear transform on the received sensor data from both of the different types of sensors 16, 18 so that sensor data from both types of sensors 16, 18 can be provided in a common positioning coordinate system. This allows global errors which might otherwise occur to be detected as a vehicle is transitioning between the areas associated with the different types of sensor systems.

FIG. 2A shows schematically an example of the method 100 for localizing a vehicle 20 in an area which provides consistent and continuous localization information even when the vehicle 20 transitions between an open space area such as that labelled 12A in Figure 1 to tunnel 14 or from tunnel 14 to open space area 12B, where the area is an area of vehicle operation. As shown in FIG. 2A, the method 100 comprise in some embodiments: receiving in S1 a plurality of different types of sensor data 102, where each type of sensor data is associated with a different vehicle positioning coordinate system, performing in S2 a non-linear transform on at least one type of received sensor data to provide that sensor data in a common positioning coordinate system with the other type of sensor data 104, automatically calibrating in S3 each type of received sensor data 106 to correct any errors and to form in S4 calibrated sensor data associated with the common positioning coordinate system 108, and localizing in S5 the vehicle 20 in the common positioning system using the calibrated sensor data 110.

Figure 2B shows a more detailed example embodiment of the method 100 in which the method of localizing a vehicle in an area of vehicle operation where the area comprises a plurality of sub-areas, at least one sub-area using a different type of sensor to provide localization coverage from one or more of the other sub-areas. In Figure 2B, the method 100 comprises receiving sensor data from a plurality of different types of sensors positioned in the area, at least two of the different types of sensors providing location data using different positioning coordinate systems 102, automatically calibrating received sensor data associated with different positioning coordinate systems 106 to form sensor data associated with a common positioning coordinate system 108, and localizing the vehicle using the calibrated sensor data associated with the common positioning coordinate system in the area 110, where the automatic calibration of the received sensor data 106 includes performing at least one non-linear transform on received sensor data provided by the different types of sensors to provide the sensor data associated with the common positioning coordinate system 104.

The embodiments of the disclosed technology allow a vehicle to be localized in a way which provides a consistent and continuous indication of the vehicle's position even if the vehicle is operating in an area or following a guided trajectory which passes through areas using different types of sensor-based localisation. In some embodiments, the vehicle's pose may also be provided using the disclosed technology. In some embodiments, at least one sub-area has no line of sight to a global positioning system satellite, for example, it may be an underground area, or underwater even, or be an area beneath an overpass, or be a tunnel or part of a tunnel system or complex, or be an area in a building such as a hanger or garage or other type of covered area.

Embodiments of the method 100 allows vehicle localization to be provided in the operational area of the vehicle 20 using multiple different sensor-based measurement systems in a way which may allow global measurement errors between two different vehicle localization sensor systems to be reduced. In other words, method 100 may be implemented to more accurately locate a vehicle such as an autonomous vehicle within the vehicle's operational area in some embodiments.

The vehicle 20 may be a heavy-duty vehicle in some embodiments, and it may be a vehicle pulling or pushing one or more other vehicles or vehicle accessories. For example, in some embodiments the vehicle is an autonomous vehicle with an ADS configured to make tactical decisions for a control system for the vehicle's propulsion system. In some embodiments, the vehicle such as a heavy-duty vehicle, which may be an autonomous heavy-duty vehicle, or a remote controlled heavy-duty vehicle, or be a semi-autonomous or manually controlled heavy-duty vehicle that needs to be localized in its area of operation. The heavy-duty vehicle may have one or more vehicle accessories attached such as, for example, a trailer and/or container. A heavy-duty vehicle may comprise a wide range of different physical components or devices, such as combustion engines, electric machines, friction brakes, regenerative brakes, shock absorbers, air bellows, and power steering pumps. These physical devices are commonly known as Motion Support Devices (MSD). The MSDs may be individually controllable, for instance such that friction brakes may be applied at one wheel, i.e., a negative torque, while another wheel on the vehicle, perhaps even on the same wheel axle, is simultaneously used to generate a positive torque by means of an electric machine. The autonomous operation of a heavy-duty vehicle is accordingly more complex than the autonomous operation of a more light-weight vehicle such as a car.

In some embodiments, the method may comprises weighting, for example, applying a binary weighting to use or not use, the received sensor data from a sensor of the plurality of sensors based on a determined position of sensor in the common coordinate system. A binary weighting is done in the sense that the sensors that are defined in a certain area in the map will have their sensor data output used whereas sensors located in other areas of the map will not have their sensor data used even if the sensor(s) is(are) producing output which the vehicle receives. Accordingly, in some embodiments, the weighting is binary and based on a binary decision about whether the mapped location of the sensor is in an area from which sensor data is considered to meet one or more conditions to be used or not. Such conditions may be associated with a confidence level that the data meets a threshold accuracy level for example in some embodiments. In some embodiments, however, weighting may be dynamically performed. For example, if there are two or three available sensor sources in the same location, the map could define how to weight the different sensor data based on its sensor source and/or other criteria.

In other words, if the vehicle detects a signal from a sensor having a known position in the common-positioning system based, for example, on detecting a beacon from a sensor which provides an identifier for the sensor and/or location information for the sensor, it is possible in some embodiments to look up the sensor's location in the common coordinate system. Based on the location of the sensor, for example, its distance from the vehicle's trajectory, the received sensor data may be weighted in some embodiments. For example, in some embodiments, a plurality of non-linear transforms are performed on received sensor data, each nonlinear transform being only applied for sensor data received from a particular sensor area of coverage. The distance of each sensor area of coverage from the vehicle may be used to weight the sensor data so that sensor data obtained at the vehicle using beacons or sensors located in more distant areas of coverage are given less weight than closer areas of coverage.

In some of the disclosed embodiments of the method, the method determines whether sensor data is valid based on a defined area in the map where sensors data is known to be good. In other words, where the sensors are mounted on a moving vehicle, the defined area in the map will indicate when a sensor (or sensor system) on the vehicle can be used. Only if the sensor (which is mounted on the vehicle) is inside the defined area in the map, will the sensor data can be used, for example, when the vehicle is inside area 12A.

By only using sensor data from sensors that are associated with a defined area in the map, the method provides for sensor data to be used only in locations where the sensor system has been evaluated beforehand. For example, areas where a sensor system has known limitations can be excluded in the sensor area in the map in the process of creating it. Areas with known limitation could be GPS in a tunnel or even when approaching the tunnel entrance where the line of sight to satellites are blocked. In some of these areas of limitation, the sensor will produce an output but with insufficient accuracy, hence the need to exclude that data to avoid localization failure.

In some embodiments, at least one of the sensors comprises a sensor which provides sensor data in the form of global positioning system, GPS, sensor data and the received sensor data includes global placing system data from the GPS sensor. The sensors are located as shown at fixed positions within an area, and may be positioned at intervals along a trajectory path that the vehicle is configured to be guided along. The vehicle may be guided along based on on-board instructions or guided along remotely, for example, either remotely but manually by an operator or remotely by a remote server such as a back-office server for the area operations.

In some embodiments at least one type of the sensors is a short-range positioning sensor, wherein the received sensor data comprises sensor data indicative of a relative position of the vehicle to the sensor. Embodiments of the disclosed technology in which sensor data provides type of relative measurement may need to be processed with an algorithm configured to map the relative measurements to a map in order to get a position in the map's coordinate system. Once the map-coordinate position is known, this can then be mapped to relate to one or more other coordinate systems in the system, for example, a GPS co-ordinate system, using the disclosed technology. Bluetooth in particular would be sufficient for rough localization in some embodiments in order to show a vehicles position on a map but would not have the accuracy to base vehicle controls on. However, in some applications with less requirements on accuracy it would be a viable source of positioning data.

Examples of short-range positioning sensors include Bluetooth^{™} sensors. A sensor system which comprises sensors conforming with one type of Bluetooth protocol may be considered to be a different sensor system to a system comprising sensors conforming to a different type of Bluetooth protocol. For example, low energy Bluetooth may be used to provide localization coverage in one sub-area whereas long range Bluetooth^{™} may be used to provide localization coverage in another sub-area.

For example, in some embodiments the area may comprise a construction site, or mine, or harbour or airport, or other type of area where vehicles and/or moving objects are configured to have specific trajectories and/or roles in different sub-areas. By way of example, a loading area may be provided as a sub-area of a mine, where other machines discharge their loads onto the vehicle, which may then be guided along a route to a discharge area, which may be adjacent to a road-transportation container or railway-transportation container or the like.

In some embodiments, the vehicle comprises an articulated vehicle, for example, if it is attached to a vehicle accessory such as a trailer and/or container on a trailer or the like.

In some embodiments, the received sensor data which is transformed to the common coordinate system includes one or more of: roll data, pitch data, and yaw data. This allows localizing the vehicle (10) to further determines a vehicle pose in the common coordinates for the area. Embodiments where the sensor data provides measurement data such as one or more of roll, pitch and yaw data may require processing to yield a position with the roll, pitch and/or yaw of the vehicle in a map coordinate system. This map-based position and roll, pitch and/or yaw data allows the roll, pitch and/or yaw measurements in that map coordinate system to be mapped to corresponding measurements of position and roll, pitch and/or yaw in one or more other coordinate systems.

The method 100 may be performed on-board, in other words at the vehicle in some embodiments, but in some embodiments as mentioned above, the vehicle may send sensor data to a remote server such as server 24, and the server 24 may then perform an embodiment of method 100. In some such embodiments, the server 24 may then send to the vehicle updates and/or corrections to the localization information stored on-board the vehicle and/or control signals to cause the vehicle to adapt its trajectory based on where the server has determined its location in the area to be. The vehicle 10 may be an autonomous, semi-autonomous or remote-controlled vehicle.

The disclosed vehicle localization system may be implemented using an apparatus configured to localize a vehicle in an area of vehicle operation. For example, an apparatus comprising memory, one or more processors or processing circuitry, and computer program code, which, when loaded from the memory and executed by the one or more processors or processing circuitry, cause the apparatus to perform a method of localizing a vehicle according to any one of the method embodiments disclosed herein.

The apparatus may be provided in the form of an attachable dongle or similar form of device which when suitably engaged with the control interface of the vehicle cause the vehicle to execute the method 100. In some embodiments, however, the apparatus may be attached to or integrated in the vehicle. For example, if the vehicle is a heavy-duty vehicle, the apparatus may be attached to or integrated in the heavy-duty vehicle and/or integrated into or attached to one or more vehicle accessories such as a trailer or container or the like in some embodiments. The vehicle may be an autonomous, semi-autonomous, or remotely controlled heavy-duty vehicle.

The apparatus may be configured to receive sensor data from the plurality of sensors where the sensor data from at least one sensor is weighted based on the location of the coverage area of that sensor in the common coordinate system.

At least one of the sensors providing sensor data comprises a global positioning system, GPS, sensor in some embodiments of the localization system disclosed herein. The received sensor data of method 100 may include global positioning system data from the at least one GPS sensor whilst the vehicle 20 is located in the area of localization coverage that GPS sensor provides.

At least at least one of the sensors is a short-range positioning sensor in some embodiments of the localization system disclosed herein. The received sensor data may then comprise sensor data indicative of a relative position of the vehicle to the sensor, which may be weighted in some embodiments, as well as the position of the sensor in the area.

For example, in some embodiments, a plurality of non-linear transforms are performed on received sensor data, each nonlinear transform being only applied for sensor data received from a particular sensor area of coverage. Where the vehicle is able to detect its position relative to a number of different types of overlapping sensor areas of coverage, the weighting may reduce reliance on sensor data from position beacons which are further away from the vehicle compared to sensor data from position beacons which are closer.

In some embodiments where the localization system using such beacons, an algorithm is used to first output a position in a co-ordinate system, for example, a Cartesian co-ordinate system in which a position is defined using in x,y,z tuples of co-ordinate values relative to an origin, and maybe even roll, pith yaw in that co-ordinate system. The values determined in that first coordinate system can then be mapped to a second coordinate system, for example, they can be related to another, global, coordinate system using a suitable mapping function. In embodiments of the disclosed technology where one of these beacon-based localization systems are used, one of the map layers may include the beacon's position together with an identifier, ID, so that it is possible to determine which received signal is corresponding to which beacon in the map.

In some embodiments, the received sensor data which is transformed to the common coordinate system includes one or more of: roll data, pitch data, and yaw data. This allows the vehicle localization system to use the apparatus to localize the vehicle 20 in terms of its position and vehicle pose in the area.

The disclosed technology allows positioning of vehicles or objects in defined areas such as construction or mining sites or the like where multiple positioning sensors are required to cover the vehicle's area of operation. The use of a common coordinate system allows the vehicle's position to be continuously updated as the vehicle moves along its trajectory including at any transition points where the sensor systems change, in other words as the vehicle moves out of the coverage range of one position source and into range of another.

In some embodiments, the coordinate systems for different sensors and/or sensor types may need non-linear transforms to be performed between each other to provide the vehicle localization information in a consistent coordinate system and errors between the coordinate systems needs to be handled so that the vehicle's position is continuous and known with a sufficient and ideally consistent degree of accuracy if possible even whilst switching between different sensor sources.

In some embodiments, the method 100 includes automatically mapping/calibrating sensor data from different coordinate systems to one common coordinate system during the "mapping process". The generic sensor data (x,y,z,roll,pitch,yaw) is then transformed from any different coordinate systems to a common coordinate system. This allows the vehicle to better cope with the commonly known "loop closure" problem.

The Loop closure is the problem of recognizing a previously-visited location and updating beliefs accordingly. This can be a problem because model or algorithm errors can assign low priors to the location. It occurs, for example, when simultaneous localization and mapping (SLAM) is being performed where the computational problem of constructing or updating a map of an unknown environment while simultaneously keeping track of a vehicle's location within it is required. The term prior refers to a prior probability distribution of an uncertain quantity and is the probability distribution that expresses the system's beliefs about a quantity before any evidence or observables are taken into account.

Accordingly, in some embodiments of the disclosed technology, even if a position previously visited by a vehicle is recognized and a map is corrected for that position, the source of the error, in other words, where the error is coming from may be challenging to determine. For example, one turn could be estimated wrong because of wheel slip (if measuring wheel rotation) due to local slippery conditions. Or the error could be systematic like a sensor calibration error. A correction without knowing the real error may accordingly possibly make the map worse. In such a scenario, some embodiments of the disclosed technology can usea skewed map by mapping the common area to intersecting maps and neglecting that the skewed map is skewed. A skewed map would otherwise require a non-linear transform to be mapped to another global coordinate system. Advantageously, map corrections can be handled by placing the co-ordinate systems of different sensor sources on the global map such that the transitions between locations based on their respective areas of sensor coverage are continuous rather than discontinuous. In other words, the location of the vehicle does not suddenly jump from moving from A to B where A and B are determined in one sensor system to show B as C as in another sensor system, which may result in confusing over where the vehicle really is in the other sensor system. Advantageously, some embodiments of the disclosed technology provide alternatives to using a non-linear transform, which could be very hard to estimate accurately, by instead aligning the intersecting areas of different sensor systems.

The disclosed technology provides a vehicle localization system which seeks to improve the safely level of vehicle operations in an area such as, for example, a construction or mining site or any other type of defined area where a vehicle may need to cross into different sub-areas of the site which use different types of sensor systems for localization. For example, some embodiments of the method may improve the safe operation of a vehicle such as a remotely controlled or autonomously driven vehicle which require data from a specific sensor can vary based on the position in the map.

The disclosed technology maps all sensors the vehicle 20 senses into a common coordinate system before any transforms are generated to transforms sensor data to a common coordinate system, and ideally performs this while localizing the vehicle rather than off-line.

The disclosed technology accordingly requires a mapping of all sensors in to a common coordinate system to be known before it can provide transforms that transforms sensor data to the common coordinate system while localizing.

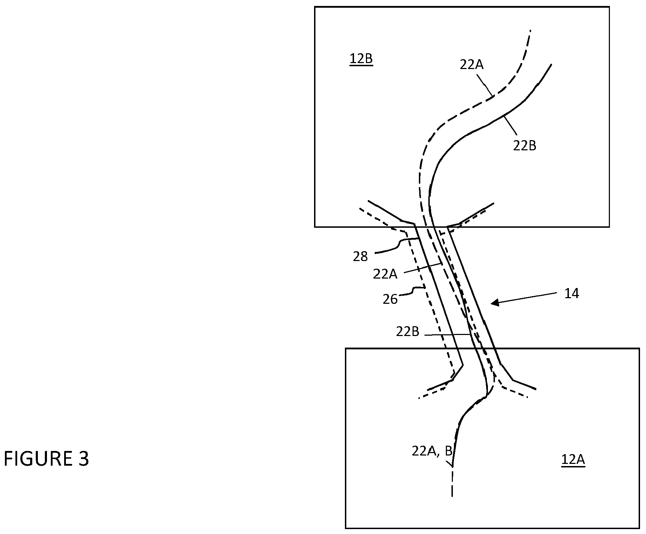

Returning now to Figure 3, this shows an example embodiment of an area comprising three sub-areas. Two sub-areas, 12A, 12B are open and linked by a tunnel which forms a third sub-area 14. Of these, sub-area 14 has a different sensor coverage system from that used by at least one if not both of subareas 12A and 12B, although in some embodiments subarea 12A may have a different sensor coverage from that of sub-area 12B.

In some embodiments of the disclosed technology, the method 100 of localizing a vehicle may be used when open areas, for example, areas 12A, 12B, may use a vehicle-based GPS system as the vehicle is operating with a line of sight with a GPS satellite and is capable of GPS signal reception. In some embodiments, additional sensors at fixed locations in an open or closed area may be used. For example, a suitable type of Bluetooth^{™} sensors may be used in addition or instead of GPS sensors in some embodiments. Such sensors may be provided at fixed locations on the ground and/or vehicle mounted. They may be used in some embodiments to provide vehicle position measurements for applications with lower accuracy requirements either alone or in conjunction with GPS where GPS coverage is available. In the tunnel area 14 one or more other types of positioning systems is used instead of GPS as there is no line of sight to a GPS satellite, however, such tunnel systems will generate errors when the vehicle position is determined using it compared to the vehicle position indicated using GPS for example.

When the tunnel structure is mapped form one open area 12A to the other 12B, there is a small drift in the mapping process, and the map of the tunnel may look like the dashed tunnel outline 26. In contrast, the real tunnel structure is at the location shown by the structure outlined in solid black lines 28. Localizing a vehicle in this environment without using a method such as that disclosed would result in a vehicle being guided along a dashed version of its trajectory 22A to have a position that follows the dashed tunnel outline 26. The true vehicle trajectory has a solid line and is labelled 22B. The true vehicle trajectory 22B would be based on the position of and follow the true structure of the tunnel 28. The true trajectory 22B diverges from the wrong trajectory 22A when the vehicle emerges from the tunnel 14 into open area 12B.

Some embodiments of the method 100 of localizing a vehicle 20, allows a continuous position to be used in all the sub-areas 12A, 12B, and 14, in other words throughout the area of vehicle operation by first performing a mapping process which comprises receiving an input position for the vehicle, which may come from the vehicle 20 or from an external localization system. For example an external localization server such as server 24 shown in Fig. 1 or a GPS satellite may provide localization information in some embodiments.

The input position is used to reference measurements of vehicle position to an estimated vehicle position.

The mapping process runs on the vehicle computer where the sensors are mounted too, during the mapping process each sensor or sensor subsystem operating in a sub-area of the vehicle's area of operation receives sensor data from the vehicle and references the vehicle position to a base coordinate system using the position of the sensor in the base coordinate system and the sensor data indicating the vehicles position. In other words, in some embodiments, the sensors are mounted on a vehicle, but their area of operation is defined in a limited area in a map of the operational area of the vehicle. In some embodiments, the sensor data is referenced in the base coordinate system using a current sensor measurement and a current estimated vehicle position (estimated by the localization system on-board the vehicle). This creates a transform that can be used to transform the sensor data into the base coordinate system.

As the vehicle 20 moves the transform will be defined in the geometric area in the base coordinate system where the sensor data is received.

In some embodiments, the mapping uses many vehicle positions in the base coordinate system and the corresponding sensor data, to calibrate a data transform which can cope with measurement and calibration errors in the initial sensor data. The calibration uses an algorithm to find a transform that over multiple sensor measurements and corresponding vehicle position estimates finds the transform with the least error. In some embodiments, this allows a good transform between the two coordinate system given that the transform is linear or approximated to be linear in the intersection area between two sensor areas.
a) Calibration can be performed in some embodiments, for example, in the following way:Save an initial transform by simply saving the difference of the estimated pose (x,y,z,roll,pitch,yaw) and measured pose. Due to measurements errors and estimation errors the transform will be inaccurate far away from where the transform is calculated. To improve the transform, yaw can be calibrated by using more measurements at different locations in the following way, for example, a calibration algorithm may be executed by a control system on the vehicle or by another apparatus which may be mounted on or in the vehicle, which is comprises computer code which when executed causes the control system/apparatus to do following:
   a) Calculate the initial transform (T1=x1 - u1), apply the transform to the sensor data which will then show the same position as the estimated position.
   b) At a different location, apply the transform to the new sensor data (u2). If there was an error in the yaw measurement or in the yaw estimation and hence in the transform, the current transformed sensor data will not end up on the estimated position (x2). The current estimated position, current measurement and the estimated position where the initial transform was calculated (x1) will create a triangle.
   c) Calculate the angle between the two vectors x1-x2 and x1-u2 which is the transform yaw error if neglecting the x and y position estimation and measurement error.
   d) Calibrate transform T1 by subtracting the yaw error calculated in 3 from T1 to yield T2.
   Some embodiments of the invention may use a different type of calibration algorithm to calculate the transform.
   When the sensor data is no longer received, the area for where the transform is valid will stop expanding.

In some embodiments, however, a sensor has one or more areas in a base coordinate system. In other words, in some embodiments, a sensor may have multiple areas in the base coordinate system that it is defined. The multiple areas may have different transforms in some embodiments and advantageously this allows the localization system to handle nonlinearities in the transform between two coordinate systems.

Some embodiments of the method of localization use an input position to find the position of the vehicle 20 in a common coordinate system and use the same common coordinate system to find which sensors have defined coverage areas at that vehicle's current position. If the current vehicle position is in a sensor's defined area and sensor data is received from that sensor, the sensor data is transformed at the vehicle and make available for use by the vehicle's localization system. In some embodiments, if the current position of vehicle 20 is in a sensor's defined area of coverage but the sensor data is not received, the localization system on-board the vehicle detects that sensor data is missing. Detecting a lack of sensor data may trigger an alert or alarm, for example, the vehicle may be configured to discontinue movement and/or to cease operating in some embodiments. In some embodiments, if defined sensor areas are overlapping where the positioning system switches between different types of position sensors, loss of data from one sensor type may trigger a vehicle to stop operating/stop moving as a safety mechanism before any sensor data from the other sensor system is no longer received. This is an additional safety feature as it allows the vehicle to cease moving/stop operating before all sensor data is lost.

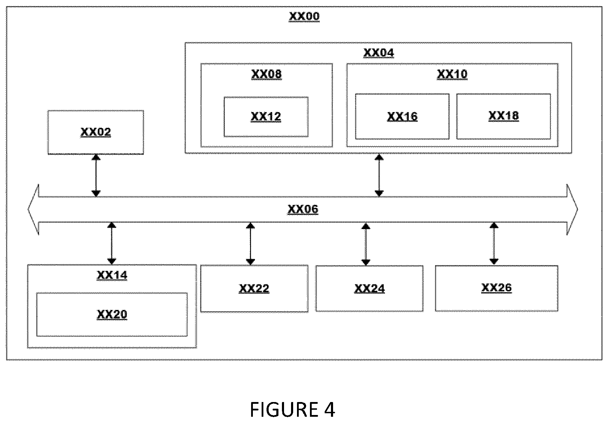

**FIG. 4** is a schematic diagram of a computer system **XX00** for implementing examples of the method of localization 100 disclosed herein. The computer system **XX00** is adapted to execute instructions from a computer-readable medium to perform these and/or any of the functions or processing described herein. The computer system **XX00** may be connected (e.g., networked) to similar computer systems of other vehicles or moving machines in a wireless LAN, an intranet, an extranet, or the Internet. While only a single device is illustrated, the computer system **XX00** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **XX00** may comprise at least one computing device or electronic device capable of including firmware, hardware, and/or executing software instructions to implement the functionality described herein. The computer system **XX00** may include a processor device **XX02** (may also be referred to as a control unit), a memory **XX04,** and a system bus **XX06.** The computer system **XX00** may include at least one computing device having the processor device **XX02.** The system bus **XX06** provides an interface for system components including, but not limited to, the memory **XX04** and the processor device **XX02.** The processor device **XX02** may include any number of hardware components for conducting data or signal processing or for executing computer code stored in memory **XX04.** The processor device **XX02** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **XX06** may be any of several types of bus structures that may further interconnect to a memory bus (with or without a memory controller), a peripheral bus, and/or a local bus using any of a variety of bus architectures. The memory **XX04** may be one or more devices for storing data and/or computer code for completing or facilitating methods described herein. The memory **XX04** may include database components, object code components, script components, or other types of information structure for supporting the various activities herein. Any distributed or local memory device may be utilized with the systems and methods of this description. The memory **XX04** may be communicably connected to the processor device **XX02** (e.g., via a circuit or any other wired, wireless, or network connection) and may include computer code for executing one or more processes described herein. The memory **XX04** may include non-volatile memory **XX08** (e.g., read-only memory (ROM), erasable programmable read-only memory (EPROM), electrically erasable programmable read-only memory (EEPROM), etc.), and volatile memory **XX10** (e.g., random-access memory (RAM)), or any other medium which can be used to carry or store desired program code in the form of machine-executable instructions or data structures and which can be accessed by a computer or other machine with a processor device **XX02.** A basic input/output system (BIOS) **XX12** may be stored in the non-volatile memory **XX08** and can include the basic routines that help to transfer information between elements within the computer system **XX00.**

The computer system **XX00** may further include or be coupled to a non-transitory computer-readable storage medium such as the storage device **XX14,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **XX14** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **XX14** and/or in the volatile memory **XX10**, which may include an operating system **XX16** and/or one or more program modules **XX18**. All or a portion of the examples disclosed herein may be implemented as a computer program product **XX20** stored on a transitory or non-transitory computer-usable or computer-readable storage medium (e.g., single medium or multiple media), such as the storage device **XX14**, which includes complex programming instructions (e.g., complex computer-readable program code) to cause the processor device **XX02** to carry out the steps described herein. Thus, the computer-readable program code can comprise software instructions for implementing the functionality of the examples described herein when executed by the processor device **XX02**. The processor device **XX02** may serve as a controller or control system for the computer system **XX00** that is to implement the functionality described herein.

The computer system **XX00** also may include an input device interface **XX22** (e.g., input device interface and/or output device interface). The input device interface **XX22** may be configured to receive input and selections to be communicated to the computer system **XX00** when executing instructions, such as from a keyboard, mouse, touch-sensitive surface, etc. Such input devices may be connected to the processor device **XX02** through the input device interface **XX22** coupled to the system bus **XX06** but can be connected through other interfaces such as a parallel port, an Institute of Electrical and Electronic Engineers (IEEE) 1394 serial port, a Universal Serial Bus (USB) port, an IR interface, and the like. The computer system **XX00** may include an output device interface **XX24** configured to forward output, such as to a display, a video display unit (e.g., a liquid crystal display (LCD) or a cathode ray tube (CRT)). The computer system **XX00** may also include a communications interface **XX26** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

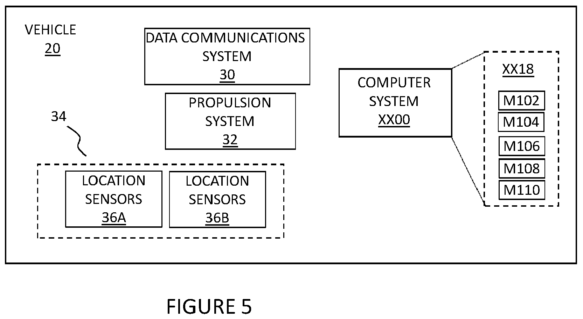

Fig. 5 is a schematic diagram of a vehicle 20 comprising the computer system XX00 of Fig. 4. As shown in Figure 5, vehicle 20 has at least a data communications system 30, for example, comprising a transmitter/receiver and antenna arrangement which are configured to allow the vehicle to send and/or receive data over a wireless communications network (not shown). The vehicle 20 also comprises a localization system 34 which is configured to receive sensor data using on-board location sensors 36A, 36B. Location sensors 36A, 36 may comprise, for example, a GPS sensor system 36A and a Bluetooth sensor system 36B in some embodiments.

Computer system XX00 is shown schematically in Figure 5 as including a computer program product XX18 which comprises a plurality of modules, which, when loaded from memory and executed by one or more processor(s) or processing circuitry of the computer system XOO cause the vehicle's localization system to perform the method of localizing 100 the vehicle 20 according to any one of the embodiments disclosed herein.

As shown in Figure 5, the computer program product XX18 includes a plurality of modules M102, M104, M106, M108 and M110 which comprise code which when executed by the computer system XXOO causes the method 100 to be performed. For example, in some embodiments, the computer program product comprises modules M102-M110 which when executed causes the method 100 comprising S1, S2, S3, S4, and S5 as shown in Figure 2A or as shown in Figure 2B to be executed. In some embodiments, the modules may be configured so that M102 performs S1, M104 performs S2, M106 performs S3, and M108 performs S4, and M110 performs S5.

It will be appreciated that in some embodiments, where the server 24 performs method 100, it is necessary for the vehicle to be capable of communicating with the server 24 in all sub-areas, and as such additional communications wireless access points and/or other types of communication systems may be provided in some sub-areas such as tunnel 24 or remote areas from server 24 to allow for wireless communications to take place with the remote server. Such systems are well known in the art however, and will not be describe in more detail herein.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method (100) of localizing a vehicle (20) in an area of vehicle operation, the area comprising a plurality of sub-areas (12A, 12B, 14), at least two of the sub-area using different types of sensors (16, 18) for vehicle localization, the method comprising:
receiving (102) sensor data from a plurality of different types of sensors (14, 16) positioned in the area, at least two of the different types of sensors (14, 16) providing location data using different positioning coordinate systems;
automatically calibrating (104) received sensor data associated with different positioning coordinate systems to form (106) sensor data associated with a common positioning coordinate system; and
localizing (108) the vehicle (20) using the calibrated sensor data associated with the common positioning coordinate system in the area, wherein the automatic calibration of the received sensor data includes performing at least one non-linear transform (106) on received sensor data provided by the different types of sensors (14, 16) to provide the sensor data associated with the common positioning coordinate system.

2. The method of claim 1, wherein the vehicle (11) is a heavy-duty vehicle.

3. The method of claim 1 or 2, wherein received sensor data from a sensor of the plurality of sensors is weighted based on the position of the sensor in the common coordinate system.

4. The method of any one of the previous claims, wherein at least one of the sensors providing sensor data comprises a global positioning system, GPS, sensor and the received sensor data includes global positioning system data from the GPS sensor.

5. The method of any one of the previous claims, wherein at least one of the sensors is a short-range positioning sensor, wherein the received sensor data comprises sensor data indicative of a relative position of the vehicle to the sensor.

6. The method of any one of the previous claims, wherein the received sensor data which is transformed to the common coordinate system includes one or more of: roll data, pitch data, and yaw data and wherein localizing the vehicle (10) determines a vehicle pose in the area (11).

7. The method of any one of the previous claims, wherein a plurality of non-linear transforms are performed on received sensor data, each nonlinear transform being only applied for sensor data received from a particular sensor area of coverage.

8. The method of any one of the previous claims, wherein the method is performed at the vehicle, wherein the vehicle (10) is an autonomous, semi-autonomous or remote-controlled vehicle (10).

9. The method of any one of the previous claims, wherein at least one sub-area has no line of sight to a global positioning system satellite.

10. An apparatus configured to localize a vehicle in an area of vehicle operation, the apparatus comprising:
memory;
one or more processors or processing circuitry;
and computer program code, which, when loaded from the memory and executed by the one or more processors or processing circuitry, cause the apparatus to perform a method according to any one of the method claims 1 to 9.

11. The apparatus of claim 10, wherein the vehicle is a heavy-duty vehicle and the apparatus is attached to or integrated in the heavy-duty vehicle.

12. The apparatus of either claim 10 or 11, wherein received sensor data from a sensor of the plurality of sensors is binary weighted based on the vehicle location and the coverage area of the sensor in the common coordinate system so that sensor data from a sensor is used when the vehicle is inside the defined coverage area for that sensor in the map.

13. The apparatus of any one of the previous claims 10 to 12, wherein at least one of the sensors providing sensor data comprises a global positioning system, GPS, sensor and the received sensor data includes global positioning system data from the GPS sensor, and at least at least one of the sensors is a short-range positioning sensor, wherein the received sensor data comprises sensor data indicative of a relative position of the vehicle to the sensor.

14. The apparatus of any one of the previous claims 10 to 13, wherein the received sensor data which is transformed to the common coordinate system includes one or more of: roll data, pitch data, and yaw data.

15. The apparatus of any one of the previous claims 10 to 14, wherein localizing the vehicle determines a vehicle pose in the area.

16. A vehicle comprising the apparatus according to any one of claims 10 to 15.

17. The vehicle of claim 16, wherein the vehicle is an autonomous, semi-autonomous, or remotely controlled heavy-duty vehicle.
